# EUROPEAN PATENT APPLICATION

(11) **EP 3 940 022 A1**
(43) Date of publication of application: **19.01.2022**
(21) Application number: 21165504.8
(22) Date of filing: 29.03.2021
(51) Int. Cl.: C08J 5/18, C08J 5/04, C08J 5/24, C08J 11/04, C08J 11/24

(54) **ULTRAVIOLET-ABSORBING POLYESTER FILM AND METHOD FOR MANUFACTURING THE SAME**

(30) Priority: 15.07.2020 TW 109123827
(71) Applicant: NAN YA PLASTICS CORPORATION, Taipei (TW)
(72) Inventor: YANG, Wen-Cheng, Taipei (TW); LIAO, Te-Chao, Taipei (TW); HSIAO, Chia-Yen, Taipei (TW); WANG, Chih-Feng, Taipei (TW)
(74) Representative: Viering, Jentschura & Partner mbB Patent- und Rechtsanwälte

(57) **Abstract**

An ultraviolet-absorbing polyester film and a method for manufacturing the same are provided. The ultraviolet-absorbing polyester film includes a physically recycled polyester resin and a chemically recycled polyester resin. The physically recycled polyester resin is formed by a plurality of physically recycled polyester chips. The chemically recycled polyester resin is formed by a plurality of chemically recycled polyester chips. The plurality of chemically recycled polyester chips further include chemically recycled electrostatic pinning polyester chips. The chemically recycled electrostatic pinning polyester chips contain electrostatic pinning additives, and the electrostatic pinning additives are metal salts. Expressed in percent by weight based on a total weight of the ultraviolet-absorbing polyester film, a content of the electrostatic pinning additives is between 0.005% and 0.1% by weight. The ultraviolet-absorbing polyester film further contains an ultraviolet absorber.

## Description

This application claims the benefit of priority to Taiwan Patent Application No. 109123827, filed on July 15, 2020.

### FIELD OF THE DISCLOSURE

The present disclosure relates to an ultraviolet-absorbing polyester film and a method for manufacturing the same, and more particularly to an ultraviolet-absorbing polyester film that uses both a physically recycled polyester resin and a chemically recycled polyester resin and a method for manufacturing the same.

### BACKGROUND OF THE DISCLOSURE

In recent years, usage of plastics has increased significantly, and as a result, a large amount of plastic waste is produced. Since the plastics are not easily degraded, recycling of the plastics and how to process the plastics after recycling have become particularly important issues.

Polyethylene terephthalate (PET) makes up a major portion of recycled plastics, and recycled PET plastics takes up about 52.4% of a total amount of the recycled plastics. As such, the following description will be based on the recycled PET plastics. In order to deal with such a large amount of recycled PET plastics, researchers in relevant field have to dedicate themselves to developing a method for processing the recycled PET plastics.

Out of the current techniques, the most common method to regenerate PET is through a physical (mechanical) manner. The recycled PET plastics that have been washed clean are firstly shredded to pieces and melted under high temperature, and then are extruded by an extruder to produce recycled PET chips (also called as r-PET).

To address environmental concerns and to ensure that PET products contain more eco-friendly recycled PET chips, a large amount of high-quality recycled PET chips is required. In the current industry, the PET recycling is mostly carried out by way of physical recycling. However, functional components (such as a slipping agent and an electrostatic pinning agent) are not allowed to be added, during a manufacturing process, to recycled chips that are produced through physical recycling. Therefore, it is necessary to use additional virgin (not regenerated) PET chips for additionally adding the above-mentioned functional components.

In this way, however, a usage rate of the recycled PET chips contained in the PET products will decrease. That is to say, in the current techniques, it is not possible to fully utilize the recycled PET chips to manufacture new PET products. If the usage rate of the recycled PET chips is too low, it may not be possible to satisfy a standard set up by environmental regulations such that an eco-label can be obtained. Moreover, as virgin PET chips that are newly used in the process of manufacturing the PET products would subsequently become the recycled PET plastics that require processing, a problem of recycling and reusing would still arise.

### SUMMARY OF THE DISCLOSURE

In response to the above-referenced technical inadequacies, the present disclosure provides an ultraviolet-absorbing polyester film and a method for manufacturing the same.

In one aspect, the present disclosure provides a method for manufacturing an ultraviolet-absorbing polyester film, which is used to recycle and reuse a recycled polyester material. The method for manufacturing the ultraviolet-absorbing polyester film includes: physically reproducing a part of the recycled polyester material to obtain a plurality of physically recycled polyester chips; chemically reproducing another part of the recycled polyester material to obtain a plurality of chemically recycled polyester chips; and mixing and melt extruding the plurality of physically recycled polyester chips and the plurality of chemically recycled polyester chips to form the ultraviolet-absorbing polyester film. The plurality of chemically recycled polyester chips further include chemically recycled electrostatic pinning polyester chips. The chemically recycled electrostatic pinning polyester chips contain at least one kind of electrostatic pinning additives, and the electrostatic pinning additives are metal salts. Based on 100 parts by weight of a total content of the polyester chips (i.e., the physically recycled polyester chips and the chemically recycled polyester chips), a content of the chemically recycled electrostatic pinning polyester chips of the plurality of chemically recycled polyester chips is between 5 and 35 parts by weight. In at least one of the physical reproducing step and the chemical reproducing step, an ultraviolet absorber is added into the recycled polyester material. The ultraviolet absorber is a monomer having an ultraviolet-absorbing functional group or an ultraviolet-absorbing compound, and the ultraviolet-absorbing polyester film contains the ultraviolet absorber.

Preferably, in the method for manufacturing the ultraviolet-absorbing polyester film, the plurality of physically recycled polyester chips form a physically recycled polyester resin, and the plurality of chemically recycled polyester chips form a chemically recycled polyester resin that is mixed with the physically recycled polyester resin. Based on 100 parts by weight of the total content of the polyester chips, a content of the plurality of physically recycled polyester chips is between 50 and 95 parts by weight, a content of the plurality of chemically recycled polyester chips is between 1 and 40 parts by weight, and a total content of the plurality of physically recycled polyester chips and the plurality of chemically recycled polyester chips is between 55 and 100 parts by weight.

Preferably, the step of chemically reproducing another part of the recycled polyester material further includes: depolymerizing the recycled polyester material to obtain a raw material mixture, and then repolymerizing and granulating the raw material mixture to obtain the plurality of chemically recycled polyester chips.

Preferably, the step of repolymerizing the raw material mixture further includes: adding the electrostatic pinning additives to a part of the raw material mixture, and then repolymerizing and granulating the raw material mixture to obtain the chemically recycled electrostatic pinning polyester chips.

Preferably, a content of the electrostatic pinning additives in the chemically recycled electrostatic pinning polyester chips is between 0.01% and 0.3% by weight, so that a content of the electrostatic pinning additives in the ultraviolet-absorbing polyester film is between 0.005% and 0.1% by weight.

Preferably, the step of repolymerizing the raw material mixture further includes: adding a slipping agent to a part of the raw material mixture, and then repolymerizing and granulating the raw material mixture to obtain chemically recycled slipping polyester chips. The slipping agent is at least one selected from the group consisting of silicon dioxide, calcium carbonate, barium sulfate, polystyrene, silica gel, and acrylic. Based on 100 parts by weight of the total content of the polyester chips, a content of the chemically recycled slipping polyester chips is between 5 and 10 parts by weight.

Preferably, a grain diameter of the slipping agent is less than 2 micrometers. A content of the slipping agent in the chemically recycled slipping polyester chips is between 0.1% and 20% by weight, so that a content of the slipping agent in the ultraviolet-absorbing polyester film is between 0.01% and 2% by weight, and the ultraviolet-absorbing polyester film has a transparency of not less than 85%.

Preferably, the step of repolymerizing the raw material mixture further includes: adding the monomer having an ultraviolet-absorbing functional group to a part of the raw material mixture, and then repolymerizing and granulating the raw material mixture to obtain chemically recycled ultraviolet-absorbing polyester chips.

Preferably, the ultraviolet absorber is a reactive ultraviolet absorber, and the reactive ultraviolet absorber has a chemical structure including at least two reactive functional groups. The reactive functional groups can be a hydroxyl group (-OH), a carboxyl group, or an ester group (-COOR).

Preferably, the step of physically reproducing a part of the recycled polyester material further includes: physically shredding the recycled polyester material, and then adding the ultraviolet-absorbing compound to the shredded recycled polyester material and granulating the same to obtain physically recycled ultraviolet-absorbing polyester chips.

Preferably, when the reactive ultraviolet absorber is provided in the chemically reproducing step, a copolymerization reaction is carried out between the raw material mixture and the hydroxyl group, the carboxyl group, or the ester group in the chemical structure of the reactive ultraviolet absorber. In this way, the reactive ultraviolet absorber is grafted onto at least one of a main chain and a branched chain of a polyester molecular structure in the process of repolymerizing the raw material mixture.

Preferably, the recycled polyester material is a plurality of recycled PET bottle chips and a polyester component of the plurality of recycled PET bottle chips includes isophthalic acid (IPA) serving as a dibasic acid unit, so that the ultraviolet-absorbing polyester film contains the isophthalic acid. Expressed in mole percent based on a total amount of dibasic acid monomers in the ultraviolet-absorbing polyester film, a content of the isophthalic acid in the ultraviolet-absorbing polyester film is between 0.5 mol% and 5 mol%.

Preferably, a polyester component of the plurality of recycled PET bottle chips includes biomass-derived ethylene glycol serving as a diol unit, so that the ultraviolet-absorbing polyester film contains the biomass-derived ethylene glycol. Expressed in percent by weight based on a total weight of the ultraviolet-absorbing polyester film, a content of the biomass-derived ethylene glycol in the ultraviolet-absorbing polyester film is between 1% and 25% percent by weight. In addition, a content of carbon derived from the biomass measured by carbon dating (C¹⁴) is not greater than 5% based on a total carbon content of the ultraviolet-absorbing polyester film.

In another aspect, the present disclosure provides an ultraviolet-absorbing polyester film. The ultraviolet-absorbing polyester film includes a physically recycled polyester resin formed by a plurality of physically recycled polyester chips, and a chemically recycled polyester resin formed by a plurality of chemically recycled polyester chips which is mixed with the physically recycled polyester resin. The plurality of chemically recycled polyester chips further include chemically recycled electrostatic pinning polyester chips. The chemically recycled electrostatic pinning polyester chips contain at least one kind of electrostatic pinning additives, and the electrostatic pinning additives are metal salts. Expressed in percent by weight based on a total weight of the ultraviolet-absorbing polyester film, a content of the electrostatic pinning additives in the ultraviolet-absorbing polyester film is between 0.005% and 0.1% by weight. The ultraviolet-absorbing polyester film further contains an ultraviolet absorber, and the ultraviolet absorber is dispersed in at least one of the physically recycled polyester resin and the chemically recycled polyester resin. The ultraviolet absorber is a monomer having an ultraviolet-absorbing functional group or an ultraviolet-absorbing compound.

Preferably, a content of the ultraviolet absorber in the ultraviolet-absorbing polyester film is between 10 ppm and 50000 ppm. The ultraviolet-absorbing polyester film has an excellent weather resistance. When being exposed to standard test conditions of QUV 313 and QUV 340 for 200 to 4000 hours, the ultraviolet-absorbing polyester film shows no aging, is not susceptible to embrittlement, and has a color difference (ΔE) of less than 10.

Preferably, expressed in percent by weight based on the total weight of the ultraviolet-absorbing polyester film, a content of the physically recycled polyester resin is between 50% and 95% by weight, a content of the chemically recycled polyester resin is between 1% and 40% by weight, and a total content of the physically recycled polyester resin and the chemically recycled polyester resin is between 55% and 100% by weight.

Preferably, the ultraviolet-absorbing polyester film is a transparent film. The ultraviolet-absorbing polyester film further includes a slipping agent, and the slipping agent is dispersed in the physically recycled polyester resin and/or the chemically recycled polyester resin. The slipping agent is at least one selected from the group consisting of silicon dioxide, calcium carbonate, barium sulfate, polystyrene, silica gel, and acrylic. Expressed in percent by weight based on the total weight of the ultraviolet-absorbing polyester film, an added amount of the slipping agent is between 5% and 10% by weight.

Preferably, the ultraviolet-absorbing polyester film is a matte film. The ultraviolet-absorbing polyester film further includes a matte additive, and the matte additive is selected from the group consisting of silicon dioxide, calcium carbonate, aluminum oxide, and talc. Expressed in percent by weight based on the total weight of the ultraviolet-absorbing polyester film, an added amount of the matte additive is between 0.5% and 10% by weight.

Preferably, the ultraviolet-absorbing polyester film is a white film. The ultraviolet-absorbing polyester film further includes a white additive, and the white additive is selected from the group consisting of titanium dioxide, barium sulfate, and calcium carbonate. Expressed in percent by weight based on the total weight of the ultraviolet-absorbing polyester film, an added amount of the white additive is between 5% and 40% by weight.

Preferably, the ultraviolet-absorbing polyester film is a black film. The ultraviolet-absorbing polyester film further includes a black additive, and the black additive is selected from the group consisting of carbon black and black coloring materials. Expressed in percent by weight based on the total weight of the ultraviolet-absorbing polyester film, an added amount of the black additive is between 5% and 40% by weight.

One beneficial effect of the present disclosure is that, in the ultraviolet-absorbing polyester film and the method for manufacturing the same as provided, by virtue of "the plurality of chemically recycled polyester chips further including chemically recycled electrostatic pinning polyester chips which contain the electrostatic pinning additives, and the electrostatic pinning additives being metal salts" and "based on 100 parts by weight of the total content of the polyester chips, the content of the chemically recycled electrostatic pinning polyester chips of the plurality of chemically recycled polyester chips being between 5 and 35 parts by weight", the ultraviolet-absorbing polyester film can be manufactured by using a highly recycled polyester material, without needing to add additional virgin polyester chips or only needing to add a small amount thereof. In this way, a usage amount of the virgin polyester chips can be decreased significantly, and environmental concerns can be addressed.

Furthermore, in the ultraviolet-absorbing polyester film and the method for manufacturing the same as provided by the present disclosure, through "adding the ultraviolet absorber into the recycled polyester material in at least one of the physical reproducing step and the chemical reproducing step", the ultraviolet-absorbing polyester film has a certain ultraviolet-absorbing effect, and can be applied to specific products (e.g., architectural materials, electronic products, light-shading tapes for mobile phone, and laptop keyboard skins).

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.

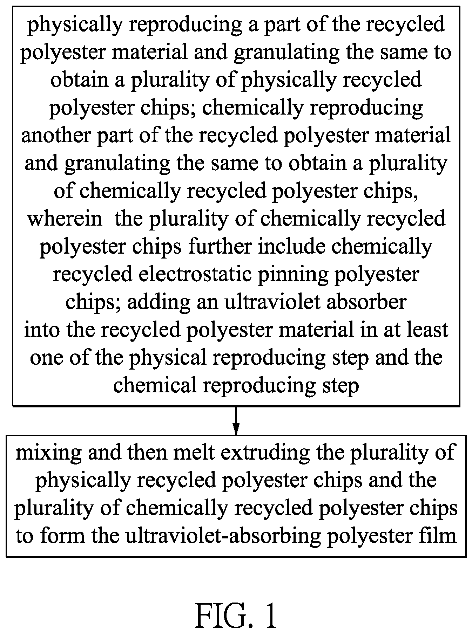

FIG. 1 is a flowchart describing a method for manufacturing an ultraviolet-absorbing polyester film according to the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

In order to process large amounts of recycled plastics, especially with respect to a recycled polyester material, an embodiment of the present disclosure provides an ultraviolet-absorbing polyester film that is produced by using the recycled polyester material, and a method for manufacturing the same.

In the ultraviolet-absorbing polyester film of the present embodiment and the method for manufacturing the same, a physically recycled polyester resin is obtained through physical reproduction, and a chemically recycled polyester resin is obtained through chemical reproduction. In this way, a usage amount of the recycled polyester material in the ultraviolet-absorbing polyester film would increase.

To be more specific, the ultraviolet-absorbing polyester film of the present embodiment can be produced by using a highly recycled polyester material, without needing to add additional virgin polyester chips or only needing to add a small amount thereof.

### [Recycled Polyester Material]

Firstly, to obtain the recycled polyester material that is reusable, a recycling method for polyester resins includes: collecting discarded polyester resin materials of all types. The discarded polyester resin materials are then sorted in terms of type, color, and intended purpose. Further, these discarded polyester resin materials are pressed and baled to be shipped to waste treatment facilities. In the present embodiment, the discarded polyester resin materials are recycled PET bottles. However, the present disclosure is not limited thereto.

Next, other parts (e.g., bottle tops, labels, and additives) of the discarded polyester resin materials would be removed. When such parts are removed from the discarded polyester resin materials, the discarded polyester resin materials are to be shredded. In addition, bottle rims, gaskets, and bottle bodies of different materials are separated from each other by flotation. The discarded polyester resin materials that are shredded are then dried. In this way, the recycled polyester material which has been processed, e.g. recycled PET (r-PET) bottle chips, can be obtained, and a subsequent process for manufacturing the polyester film may proceed.

It is worth mentioning that, in other embodiments of the present disclosure, the recycled polyester material can be, for example, a processed recycled polyester material directly obtained through purchase, so as to proceed with the subsequent process for manufacturing the polyester film.

In the embodiment of the present disclosure, the method for manufacturing the ultraviolet-absorbing polyester film includes: physically reproducing a part of the recycled polyester material (e.g. PET bottle chips) and granulating the same to obtain a plurality of physically recycled polyester chips, and chemically reproducing another part of the recycled polyester material and granulating the same to obtain a plurality of chemically recycled polyester chips.

It should be noted that, the terms "polyester", "polyester material", "polyester resin", etc. refer to any type of polyester, and especially to polyarylate. In particular, polyester derived from terephthalic acid and ethylene glycol, i.e., polyethylene terephthalate (PET), is referred to herein.

The polyester can also be, for example, polytrimethylene terephthalate, polybutylene terephthalate, or polyethylene naphthalate. The polyester in the present embodiment is preferably polyethylene terephthalate and polytrimethylene terephthalate. Moreover, a copolymer can also be used. The copolymer herein particularly refers to a copolymer derived from more than two types of dicarboxylic acid and/or more than two types of diol component.

### [Physical Reproduction]

A physical reproduction method includes: shredding the polyester material that is recycled (e.g., PET bottle chips), so as to decrease the time and energy consumption required for melting the recycled polyester material. Then, there is melting and mixing of the recycled polyester material that has been shredded, and then granulation of the same via a single-screw extruder or a twin-screw extruder, so as to obtain the plurality of physically recycled polyester chips. That is to say, after undergoing the steps of shredding, melting and extruding in a sequential order, the recycled polyester material is reshaped, so that polyester molecules in the recycled polyester material are rearranged and thereby produce the plurality of physically recycled polyester chips.

Specifically, in the present embodiment, the plurality of physically recycled polyester chips can be further separated into physically recycled regular polyester chips and physically recycled slipping polyester chips.

The physically recycled regular polyester chips are physically recycled polyester chips that are not added with other additional additives (e.g., an electrostatic pinning additive, a slipping agent, and a coloring material) in the physical reproduction process.

Further, the physically recycled slipping polyester chips are physically recycled polyester chips that are further added with a slipping agent in the physical reproduction process (especially in the polyester melting process).

That is to say, the physically recycled slipping polyester chips contain a slipping agent, and the slipping agent is at least one selected from the group consisting of silicon dioxide, calcium carbonate, barium sulfate, polystyrene, silica gel, and acrylic.

It should be noted that, in the present embodiment, the slipping agent can not only be added to the physically recycled polyester chips, but also be selectively added to chemically recycled polyester chips.

It is also worth mentioning that the polyester molecules have only been rearranged in the physical reproduction process, without being regrouped. Therefore, components originally present in the recycled polyester material (e.g., a metal catalyst, a slipping agent, an antioxidant, or an additive used in polyester synthesis) would still remain in a physically recycled polyester material, so that the polyester film that is finally formed would also contain such components. Meanwhile, properties that are inherent in polyester resins of PET bottles, such as having a lower concentration of cyclic oligomer, would also be kept in the physically recycled polyester chips.

### [Chemical Reproduction]

A chemical reproduction method includes: shredding the polyester material that is recycled (e.g., PET bottle chips), so as to decrease the time and energy consumption required for depolymerizing the recycled polyester material. Then, by immersion of the recycled polyester material that has been shredded in a chemical depolymerization solution, the polyester molecules of the recycled polyester material are subject to scission, thereby achieving depolymerization of the recycled polyester material. Further, a polyester composite with a shorter molecular chain and an ester monomer (e.g., terephthalic acid bis(2-hydroxyethyl) ester (BHET)) formed by a combination of one dibasic acid unit and two diol units can be obtained.

In the present embodiment, the chemical depolymerization solution can be a solution of, for example, water, methyl alcohol, ethanol, ethylene glycol, diethylene glycol, or a combination thereof. However, the present disclosure is not limited thereto. For example, water is used for hydrolysis, and methyl alcohol, ethanol, ethylene glycol, or diethylene glycol is used for alcoholysis.

A raw material mixture is then filtered, so as to decrease concentration of non-polyester impurities in the raw material mixture. In addition, under specific reaction conditions, monomers and/or oligomers in the raw material mixture are repolymerized and granulated, so that the plurality of chemically recycled polyester chips can be obtained.

That is to say, different from physical reproduction, the chemical reproduction process involves "depolymerizing and repolymerizing the polyester molecules of the recycled polyester material", which allows the polyester molecules to be depolymerized into molecules of smaller molecular weight, and be repolymerized to form a new polyester resin.

In other embodiments of the present disclosure, a preparation method for the chemically recycled polyester chips is not limited by the description of the above-mentioned embodiment. The chemically recycled polyester chips can also be produced by a hydrolysis method or a supercritical fluid method. In the hydrolysis method, the recycled polyester material is processed in an alkaline solution. When being subject to a certain temperature, a certain pressure, and irradiation of microwave radiation, the polyester molecules are completely split into monomers. In the supercritical fluid method, the recycled polyester material is broken down into a small amount of monomers and oligomers in the methyl alcohol that is in a supercritical fluid state. A yield of the monomers and the oligomers would be affected by a reaction temperature and a reaction time.

More specifically, in the present embodiment, the plurality of chemically recycled polyester chips can be further separated into chemical regular polyester chips, chemical slipping polyester chips, and chemical electrostatic pinning polyester chips.

The chemical regular polyester chips are chemically recycled polyester chips that are not added with other additional additives (e.g., an electrostatic pinning additive, a slipping agent, and a coloring material) in the chemical reproduction process.

Moreover, a preparation method for the above-mentioned chemical slipping polyester chips and the chemical electrostatic pinning polyester chips can be, for example, adding other additives (e.g., a slipping agent, an electrostatic pinning additive, and the like) to the raw material mixture with monomers (e.g., an ester monomer (BHET) formed by a reaction between two diol units and one dibasic acid unit) and/or oligomers in the repolymerization process of the polyester molecules. In this way, the additives would be uniformly mixed in the raw material mixture, to thereby alter properties of the chemically recycled polyester resin (e.g., slipperiness and electrostatic pinning property).

In the present embodiment, the step of repolymerizing the raw material mixture further includes: adding a slipping agent to a part of the raw material mixture to be uniformly mixed, and then repolymerizing and granulating the raw material mixture to obtain chemically recycled slipping polyester chips. The slipping agent is at least one selected from the group consisting of silicon dioxide, calcium carbonate, barium sulfate, polystyrene, silica gel, and acrylic.

In addition, as mentioned above, the slipping agent can be selectively added in the physically recycled polyester chips and/or the chemically recycled polyester chips.

In the present embodiment, the step of repolymerizing the raw material mixture further includes: adding electrostatic pinning additives to a part of the raw material mixture, and then repolymerizing and granulating the raw material mixture to obtain chemically recycled electrostatic pinning polyester chips.

It should be noted that, in the present description, the term "electrostatic pinning" refers to a use of a material that increases electrical conductivity or decreases electrical resistance, and the term "electrostatic pinning additive" refers to the material that increases electrical conductivity or decreases electrical resistance.

According to the embodiment of the present disclosure, a preferred compound that is provided with an electrostatic pinning effect will be illustrated in the following description. However, the present disclosure is not limited thereto. Other known materials in the current technology, i.e., compounds or components that increase electrical conductivity of polyester or decrease electrical resistance thereof, can also be selected for use.

More specifically, the electrostatic pinning additives used in the present embodiment are metal salts. Preferably, the metal salts are metal salts that contain alkali metals or alkaline-earth metals, and contain aliphatic carboxylic acid.

In the metal salts that contain aliphatic carboxylic acid, a molecular structure of the aliphatic carboxylic acid contains 2 to 30 carbon atoms. For example, the aliphatic carboxylic acid (in the form of metal salts) contains monocarboxylic acid and dicarboxylic acid, and can be, for example, acetic acid, palmitic acid, stearic acid, oleic acid, or sebacic acid. In the present embodiment, the aliphatic carboxylic acid is preferably the acetic acid.

Furthermore, metal components of the metal salts can be, for example, alkali metals or alkaline-earth metals. In other words, the metal salts can be, for example, lithium salts, sodium salts, potassium salts, calcium salts, or magnesium salts.

In the present embodiment, the metal salts are preferably the magnesium salts or the lithium salts. The magnesium salts can be, for example, magnesium acetate (Mg(CH₃COO)₂), and the lithium salts can be, for example, lithium acetate (CH₃COOLi). However, the present disclosure is not limited thereto.

It is worth mentioning that, in current methods for manufacturing the ultraviolet-absorbing polyester films, a method that involves electrostatic pinning of a polyester melt is often employed to improve a production speed of the ultraviolet-absorbing polyester film. In such a method, an electrical resistance of the polyester melt is required to be as low as possible to achieve a high product quality. This can often be realized through adding the electrostatic pinning additives to the polyester melt.

In the current technology, however, the electrostatic pinning additives are often added in the virgin polyester chips. Therefore, although the recycled polyester material is used for manufacturing the polyester film, a large amount of the virgin polyester chips is still required to complete the manufacturing of the polyester film. As such, a usage rate of the recycled polyester material cannot be effectively enhanced.

Compared with the current technology, the method for manufacturing the ultraviolet-absorbing polyester film in the present embodiment is to, in the repolymerization process of the polyester molecules, add the electrostatic pinning additives to the raw material mixture with monomers (e.g., BHET) and/or oligomers. In this way, the electrostatic pinning additives and the monomers and/or the oligomers are mixed uniformly. Then, the monomers and/or the oligomers in the raw material mixture would be repolymerized, so that the electrostatic pinning additives can be more uniformly mixed in the polyester resins.

Accordingly, provision of the chemically recycled electrostatic pinning polyester chips in the present embodiment can substitute for adding of the electrostatic pinning additives to the virgin polyester materbatches, so as to effectively decrease a usage amount of the virgin polyester chips and significantly increase the usage rate of the recycled polyester material.

It should be noted that, in order for the electrostatic pinning additives of the present embodiment to be uniformly mixed in polyester components, the chemical reproduction method must be employed.

In contrast, in the physical reproduction method, since the polyester molecules cannot be significantly degraded into monomers and/or oligomers, the electrostatic pinning additives cannot be uniformly mixed in the polyester resins. Thus, an intended effect of the electrostatic pinning additives (e.g., electrostatic pinning property) is prevented from being exerted.

That is to say, through adding the chemically recycled electrostatic pinning polyester chips of the present embodiment, electrical conductivity of the polyester resins can be effectively enhanced, which allows a high-quality polyester film to be manufactured by an electrostatic device.

In a preparation process for the polyester film, when the chemically recycled electrostatic pinning polyester chips of the present embodiment are used, the speed of a first roller (injection molding roller/cooling roller) of a polyester film production equipment is significantly increased (for example, reaching a maximum value of 120m/min), while the polyester film can still be produced smoothly. At this speed, the polyester film can still remain to be closely adhered to a roller surface. In addition, at such a high speed, a thinner thin film can be produced. For example, a thin film that has a minimum thickness of 9 micrometers can be produced. In particular, the chemically recycled electrostatic pinning polyester chips of the present embodiment can effectively regulate the required electrical conductivity or electrical resistance value.

Accordingly, a number of chemically recycled polyester chips with different properties can be produced by virtue of the above-mentioned additives. Further, by virtue of the above-mentioned two different processes of physical reproduction and chemical reproduction, physically recycled polyester chips and chemically recycled polyester chips of different properties can be obtained. In this way, when a specific type of the chemically recycled polyester chips is selected, and a usage ratio is arranged between the physically recycled polyester chips and the chemically recycled polyester chips, it can be advantageous for subsequent manufacturing of different polyester products (for example, an ultraviolet-absorbing polyester film).

It is worth mentioning that, with respect to the method for manufacturing the polyester film of the present embodiment, cyclic oligomers may be generated in both the physical reproduction and chemical reproduction processes. Here, a concentration of the cyclic oligomers generated in the physical reproduction process is far less than a concentration of the cyclic oligomers generated in the chemical reproduction process.

It is also worth mentioning that, in one embodiment of the present disclosure, the step of chemically reproducing another part of the recycled polyester material further includes: using an ethylene glycol depolymerization solution to depolymerize the recycled polyester material, thereby obtaining the raw material mixture. Then, the plurality of physically recycled polyester chips are mixed with the plurality of chemically recycled polyester chips to decrease a concentration of diethylene glycol in the polyester film product. To be more specific, as a large amount of the ethylene glycol depolymerization solution is added to depolymerize the recycled polyester material, a composition ratio of diethylene glycol of the chemically recycled polyester resin as produced in a subsequent polymerization process would be relatively high. In addition, the diethylene glycol contains an ether group, which would decrease a heat resistance of the polyester material. Therefore, through mixing the plurality of physically recycled polyester chips with the plurality of chemically recycled polyester chips, an overall concentration of diethylene glycol in the polyester film is decreased in the present disclosure, thereby improving the above-mentioned problem of decreased heat resistance.

### [Preparation of Polyester Film]

After the physical reproducing and chemical reproducing steps, the method for manufacturing the ultraviolet-absorbing polyester film of the present embodiment further includes: mixing and then melt extruding the plurality of physically recycled polyester chips and the plurality of chemically recycled polyester chips to form one ultraviolet-absorbing polyester film.

In the ultraviolet-absorbing polyester film, the plurality of physically recycled polyester chips form a physically recycled polyester resin, and the plurality of chemically recycled polyester chips form a chemically recycled polyester resin. The physically recycled polyester resin and the chemically recycled polyester resin are uniformly mixed with each other.

To enhance the usage rate of the recycled polyester material, each type of the recycled polyester chips as mentioned above has an appropriate content range.

Specifically speaking, based on 100 parts by weight of a total content of the polyester chips, a content of the plurality of physically recycled polyester chips is preferably between 50 and 95 parts by weight, and is most preferably between 60 and 80 parts by weight. A content of the plurality of chemically recycled polyester chips is preferably between 1 and 40 parts by weight, and is most preferably between 20 and 30 parts by weight. Furthermore, a total content of the plurality of physically recycled polyester chips and the plurality of chemically recycled polyester chips is preferably between 55 and 100 parts by weight, and is most preferably between 70 and 100 parts by weight.

That is to say, expressed in percent by weight based on a total weight of the ultraviolet-absorbing polyester film, a content of the physically recycled polyester resin is preferably between 50% and 95% by weight, and is most preferably between 60% and 80% by weight. A content of the chemically recycled polyester resin is preferably between 1% and 40% by weight, and is most preferably between 20% and 30% by weight. Furthermore, a total content of the physically recycled polyester resin and the chemically recycled polyester resin is preferably between 55% and 100% by weight, and is most preferably between 70% and 100% by weight.

It should be noted that, the term "percent by weight" may be abbreviated as "wt%" in the present description.

Based on the above configuration, a highly recycled polyester material can be used in the method for manufacturing the ultraviolet-absorbing polyester film of the present embodiment, without needing to add additional virgin polyester chips or only needing to add a small amount thereof. For example, in one embodiment of the present disclosure, a content of the virgin polyester chips is generally not greater than 50 parts by weight, is preferably not greater than 30 parts by weight, and is most preferably not greater than 10 parts by weight.

To be specific, with respect to the slipping agent, based on 100 parts by weight of the total content of the polyester chips, a content of the physically recycled slipping polyester chips and/or the chemically recycled slipping polyester chips is between 5 and 10 parts by weight relative to all the polyester chips.

Further, a grain diameter of the slipping agent is less than 2 micrometers. Of the physically recycled slipping polyester chips and/or the chemically recycled slipping polyester chips, a content of the slipping agent in the above-mentioned recycled slipping polyester chips is between 0.1% and 20% by weight, so that a content of the slipping agent in the ultraviolet-absorbing polyester film is between 0.01% and 2% by weight.

In addition, with respect to the electrostatic pinning additives, based on 100 parts by weight of the total content of the polyester chips, a content of the chemically recycled electrostatic pinning polyester chips of the plurality of chemically recycled polyester chips is between 5 and 35 parts by weight.

A content of the electrostatic pinning additives in the chemically recycled electrostatic pinning polyester chips is between 0.01% and 0.3% by weight, so that a content of the electrostatic pinning additives in the ultraviolet-absorbing polyester film is between 0.005% and 0.1% by weight.

It is worth mentioning that, in order for the ultraviolet-absorbing polyester film to exhibit an effect of blocking ultraviolet rays, in the method for manufacturing the ultraviolet-absorbing polyester film of the present embodiment, an ultraviolet absorber is added into the recycled polyester material in at least one of the physical reproducing step and the chemical reproducing step. The ultraviolet absorber is a monomer having an ultraviolet-absorbing functional group or an ultraviolet-absorbing compound, and the ultraviolet-absorbing polyester film contains the ultraviolet absorber.

For example, the ultraviolet absorber can be added by way of chemical reproduction. In addition, the step of repolymerizing the raw material mixture further includes: adding the monomer having an ultraviolet-absorbing functional group to a part of the raw mixture material, and then repolymerizing the raw material mixture that is added with the monomer having an ultraviolet-absorbing functional group and granulating the same, to thereby obtain chemically recycled ultraviolet-absorbing polyester chips.

Moreover, the ultraviolet absorber can also be added by way of physical reproduction. Specifically speaking, the step of physically reproducing a part of the recycled polyester material further includes: mechanically (physically) shredding the recycled polyester material, and then adding the ultraviolet-absorbing compound to the shredded recycled polyester material and granulating the same via the single-screw extruder or the twin-screw extruder, to thereby obtain physically recycled ultraviolet-absorbing polyester chips.

Accordingly, the ultraviolet-absorbing polyester film further contains the ultraviolet absorber, and the ultraviolet absorber is evenly dispersed in at least one of the chemically recycled polyester resin and the physically recycled polyester resin.

The ultraviolet absorber can be, but is not limited to, ultraviolet absorbers under the series of Uvinul^{®} or Tinuvin^{®} that are sold by BASF, ultraviolet absorbers under the series of Chiguard^{®} that are sold by CHITEC, and ultraviolet absorbers or combinations thereof under the series of CYASORB^{®} that are sold by SOLVAY. For example, the ultraviolet absorber can be monomers having ultraviolet-absorbing functional groups as shown in Table 1, or ultraviolet-absorbing compounds as shown in Table 2.

**[Table 1: Reactive Ultraviolet Absorber]**

| Product Model No. | CAS Registry Number | |
|---|---|---|
| Chiguard^{®} 5582 | 127519-17-9 | 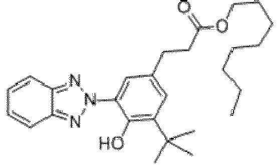 |
| CYASORB^{®} UV-2908 | 67845-93-6 | 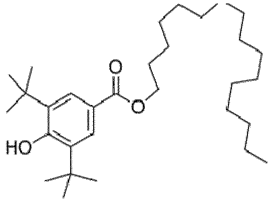 |
| Chiguard^{®} 100 | 63843-89-0 | 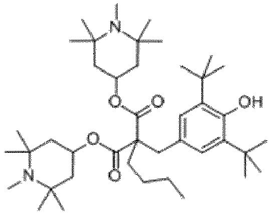 |

**[Table 2: Added Ultraviolet Absorber]**

| Product Model No. | CAS Registry Number | |
|---|---|---|
| Uvinul^{®} 5050 | 152261-33-1 | 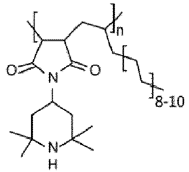 |
| Chiguard^{®} 228 | 106990-43 -6 | 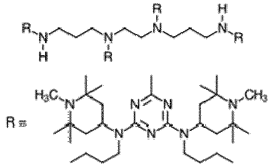 |
| CYASORB^{®} UV-3853 | 167078-06-0 | 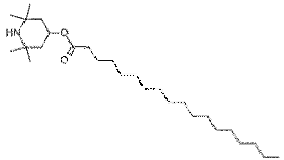 |
| CYASORB^{®} UV-3346 | 082451-48-7 | 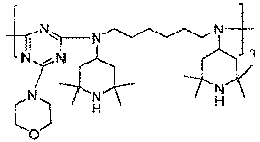 |
| CYASORB^{®} UV-3638F | 18600-59-4 | 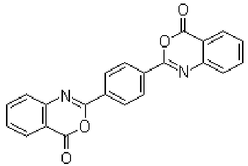 |

Depending on an addition of the ultraviolet absorber, the ultraviolet-absorbing polyester film of the present embodiment can block ultraviolet light with a wavelength less than 400 nanometers, and has an ultraviolet absorption rate greater than 95%. In addition, the ultraviolet-absorbing polyester film has an excellent weather resistance. When being exposed to standard test conditions of QUV 313 and QUV 340 for 200 to 4000 hours, the ultraviolet-absorbing polyester film shows no aging, is not susceptible to embrittlement, and has a color difference (ΔE) of less than 10.

Further, as the ultraviolet-absorbing polyester film of the present embodiment has a certain ultraviolet-absorbing effect, it can be applied to specific products (e.g., architectural materials, electronic products, light-shading tapes for mobile phone, and laptop keyboard skins).

It is worth mentioning that, according to product design requirements, the ultraviolet-absorbing polyester film of the present embodiment may be selectively added with coloring materials or dyeing agents, so as to exhibit specific colors (e.g. black, white, or alternating black and white).

Different functional additives, such as a slipping agent, a matte additive, and a coloring additive, can be added into a melted mixture in the process of manufacturing the film, so as to produce physically regenerated slipping polyester masterbtaches, physically regenerated matte polyester masterbtaches, and physically regenerated colored polyester chips, respectively. It should be noted that, the main component forming each of the physically regenerated slipping polyester masterbtaches, the physically regenerated matte polyester masterbtaches, and the physically regenerated colored polyester chips is the regenerated polyethylene terephthalate.

Specifically speaking, the slipping agent can be, but is not limited to, silicon dioxide, polystyrene, poly(methyl methacrylate), silica gel, acrylic, or a combination thereof. Expressed in percent by weight based on a total weight of a polyester composition, an added amount of the slipping agent is between 5% and 10% by weight. In a preferred embodiment, through an addition of the slipping agent, the ultraviolet-absorbing polyester film has a transparency of not less than 85%.

The matte additive can be, but is not limited to, silicon dioxide, calcium carbonate, aluminum oxide, talc, or a combination thereof. Expressed in percent by weight based on the total weight of the polyester composition, an added amount of the matte additive is between 0.5% and 10% by weight. In a preferred embodiment, through an addition of the matte additive, the ultraviolet-absorbing polyester film has a haze of 5% to 95%.

The coloring additive can be an additive of any color, such as a white additive or a black additive. The white additive can be titanium dioxide, barium sulfate, calcium carbonate, or a combination thereof. The black additive can be carbon black and black coloring materials, or a combination thereof. In some embodiments, expressed in percent by weight based on the total weight of the ultraviolet-absorbing polyester film, an added amount of the white additive is between 5% and 40% by weight, so that the ultraviolet-absorbing polyester film is of white color and has an optical density (OD) of not less than 1.2. In some embodiments, expressed in percent by weight based on the total weight of the ultraviolet-absorbing polyester film, an added amount of the black additive is between 5% and 40% by weight, so that the ultraviolet-absorbing polyester film is of black color and has an optical density of not less than 1.5.

It is also worth mentioning that, the plurality of physically recycled polyester chips and the plurality of chemically recycled polyester chips as mentioned above are both obtained through recycling, reusing, and granulation of the recycled polyester material. The recycled polyester material is recycled PET (r-PET) bottle chips.

In one embodiment of the present disclosure, a polyester component of the plurality of recycled PET bottle chips includes isophthalic acid (IPA) serving as a dibasic acid unit, so that the ultraviolet-absorbing polyester film contains the isophthalic acid. Expressed in mole percent based on a total amount of dibasic acid monomers in the ultraviolet-absorbing polyester film, a content of the isophthalic acid in the ultraviolet-absorbing polyester film is between 0.5 mol% and 5 mol%.

In one embodiment of the present disclosure, a polyester component of the plurality of recycled PET bottle chips includes biomass-derived ethylene glycol serving as a diol unit, so that the ultraviolet-absorbing polyester film contains the biomass-derived ethylene glycol. Expressed in percent by weight based on the total weight of the ultraviolet-absorbing polyester film, a content of the biomass-derived ethylene glycol in the ultraviolet-absorbing polyester film is between 1% and 25% by weight. In addition, a content of carbon derived from the biomass measured by carbon dating (C¹⁴) is not greater than 5% based on a total carbon content of the ultraviolet-absorbing polyester film.

In one embodiment of the present disclosure, a polyester component of the plurality of recycled PET bottle chips includes a metal catalyst, so that the ultraviolet-absorbing polyester film contains the metal catalyst. The metal catalyst is at least one selected from the group consisting of antimony (Sb), germanium (Ge), and titanium (Ti). Expressed in percent by weight based on the total weight of the ultraviolet-absorbing polyester film, a content of the metal catalyst in the ultraviolet-absorbing polyester film is between 0.0003% and 0.04% by weight.

### [Beneficial Effects of the Embodiments]

One beneficial effect of the present disclosure is that, in the ultraviolet-absorbing polyester film and the method for manufacturing the same as provided, by virtue of "the plurality of chemically recycled polyester chips further including chemically recycled electrostatic pinning polyester chips which contain at least one kind of electrostatic pinning additives, and the electrostatic pinning additives being metal salts" and "based on 100 parts by weight of the total content of the polyester chips, the content of the chemically recycled electrostatic pinning polyester chips of the plurality of chemically recycled polyester chips being between 5 and 35 parts by weight", the ultraviolet-absorbing polyester film can be manufactured by using a highly recycled polyester material, without needing to add additional virgin polyester chips or only needing to add a small amount thereof. In this way, a usage amount of the virgin polyester chips can be decreased significantly, and environmental concerns can be addressed.

Furthermore, in the ultraviolet-absorbing polyester film and the method for manufacturing the same as provided by the present disclosure, through "adding the ultraviolet absorber into the recycled polyester material in at least one of the physical reproducing step and the chemical reproducing step", the ultraviolet-absorbing polyester film has a certain ultraviolet-absorbing effect, and can be applied to specific products (e.g., architectural materials, electronic products, light-shading tapes for mobile phone, and laptop keyboard skins).

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A method for manufacturing an ultraviolet-absorbing polyester film, **characterized in that** a recycled polyester material is recycled and reused, the method comprising:
physically reproducing a part of the recycled polyester material to obtain a plurality of physically recycled polyester chips;
chemically reproducing another part of the recycled polyester material to obtain a plurality of chemically recycled polyester chips, wherein the plurality of chemically recycled polyester chips further include chemically recycled electrostatic pinning polyester chips which contain at least one kind of electrostatic pinning additives, and the electrostatic pinning additives are metal salts; and
mixing and then melt extruding the plurality of physically recycled polyester chips and the plurality of chemically recycled polyester chips to form the ultraviolet-absorbing polyester film;
wherein, based on 100 parts by weight of a total content of the polyester chips, a content of the chemically recycled electrostatic pinning polyester chips of the plurality of chemically recycled polyester chips is between 5 and 35 parts by weight;
wherein an ultraviolet absorber is added into the recycled polyester material in at least one of the physical reproducing step and the chemical reproducing step, the ultraviolet absorber is a monomer having an ultraviolet-absorbing functional group or an ultraviolet-absorbing compound, and the ultraviolet-absorbing polyester film contains the ultraviolet absorber.

2. The method according to claim 1, **characterized in that** the plurality of physically recycled polyester chips form a physically recycled polyester resin, and the plurality of chemically recycled polyester chips form a chemically recycled polyester resin that is mixed with the physically recycled polyester resin; wherein, based on 100 parts by weight of the total content of the polyester chips, a content of the plurality of physically recycled polyester chips is between 50 and 95 parts by weight, a content of the plurality of chemically recycled polyester chips is between 1 and 40 parts by weight, and a total content of the plurality of physically recycled polyester chips and the plurality of chemically recycled polyester chips is between 55 and 100 parts by weight.

3. The method according to claim 1, **characterized in that** the step of chemically reproducing another part of the recycled polyester material further includes: depolymerizing the recycled polyester material to obtain a raw material mixture, and then repolymerizing and granulating the raw material mixture to obtain the plurality of chemically recycled polyester chips.

4. The method according to claim 3, **characterized in that** the step of repolymerizing the raw material mixture further includes: adding the electrostatic pinning additives to a part of the raw material mixture, and then repolymerizing and granulating the raw material mixture to obtain the chemically recycled electrostatic pinning polyester chips.

5. The method according to claim 4, **characterized in that** a content of the electrostatic pinning additives in the chemically recycled electrostatic pinning polyester chips is between 0.01% and 0.3% by weight, so that a content of the electrostatic pinning additives in the ultraviolet-absorbing polyester film is between 0.005% and 0.1% by weight.

6. The method according to claim 3, **characterized in that** the step of repolymerizing the raw material mixture further includes: adding a slipping agent to a part of the raw material mixture, and then repolymerizing and granulating the raw material mixture to obtain chemically recycled slipping polyester chips; wherein the slipping agent is at least one selected from the group consisting of silicon dioxide, calcium carbonate, barium sulfate, polystyrene, silica gel, and acrylic; wherein, based on 100 parts by weight of the total content of the polyester chips, a content of the chemically recycled slipping polyester chips is between 5 and 10 parts by weight.

7. The method according to claim 6, **characterized in that** a grain diameter of the slipping agent is less than 2 micrometers; wherein a content of the slipping agent in the chemically recycled slipping polyester chips is between 0.1% and 20% by weight, so that a content of the slipping agent in the ultraviolet-absorbing polyester film is between 0.01% and 2% by weight, and the ultraviolet-absorbing polyester film has a transparency of not less than 85%.

8. The method according to claim 3, **characterized in that** the step of repolymerizing the raw material mixture further includes: adding the monomer having the ultraviolet-absorbing functional group to a part of the raw material mixture, and then repolymerizing and granulating the raw material mixture to obtain chemically recycled ultraviolet-absorbing polyester chips.

9. The method according to claim 1, **characterized in that** the step of physically reproducing the part of the recycled polyester material further includes: physically shredding the recycled polyester material, and then adding the ultraviolet-absorbing compound to the shredded recycled polyester material and granulating the same to obtain physically recycled ultraviolet-absorbing polyester chips.

10. The method according to claim 1, **characterized in that** the recycled polyester material is a plurality of recycled PET bottle chips, and a polyester component of the plurality of recycled PET bottle chips includes isophthalic acid serving as a dibasic acid unit, so that the ultraviolet-absorbing polyester film contains the isophthalic acid; wherein, expressed in mole percent based on a total amount of dibasic acid monomers in the ultraviolet-absorbing polyester film, a content of the isophthalic acid in the ultraviolet-absorbing polyester film is between 0.5 mol% and 5 mol%.

11. The method according to claim 1, **characterized in that** the recycled polyester material is a plurality of recycled PET bottle chips, and a polyester component of the plurality of recycled PET bottle chips includes biomass-derived ethylene glycol serving as a diol unit, so that the ultraviolet-absorbing polyester film contains the biomass-derived ethylene glycol; wherein, expressed in percent by weight based on a total weight of the ultraviolet-absorbing polyester film, a content of the biomass-derived ethylene glycol in the ultraviolet-absorbing polyester film is between 1% and 25% percent by weight; wherein a content of carbon derived from the biomass measured by carbon dating (C¹⁴) is not greater than 5% based on a total carbon content of the ultraviolet-absorbing polyester film.

12. An ultraviolet-absorbing polyester film, **characterized in that** the ultraviolet-absorbing polyester film comprises:
a physically recycled polyester resin formed by a plurality of physically recycled polyester chips; and
a chemically recycled polyester resin formed by a plurality of chemically recycled polyester chips which is mixed with the physically recycled polyester resin, wherein the plurality of chemically recycled polyester chips further include chemically recycled electrostatic pinning polyester chips which contain at least one kind of electrostatic pinning additives, and the electrostatic pinning additives are metal salts;
wherein, expressed in percent by weight based on a total weight of the ultraviolet-absorbing polyester film, a content of the electrostatic pinning additives in the ultraviolet-absorbing polyester film is between 0.005% and 0.1% by weight;
wherein the ultraviolet-absorbing polyester film further contains an ultraviolet absorber, and the ultraviolet absorber is dispersed in at least one of the physically recycled polyester resin and the chemically recycled polyester resin, and wherein the ultraviolet absorber is a monomer having an ultraviolet-absorbing functional group or an ultraviolet-absorbing compound.

13. The ultraviolet-absorbing polyester film according to claim 12, **characterized in that** a content of the ultraviolet absorber in the ultraviolet-absorbing polyester film is between 10 ppm and 50000 ppm; wherein a color difference of the ultraviolet-absorbing polyester film is less than 10 after 200 to 4000 hours of exposure under standard test conditions of QUV 313 and QUV 340.

14. The ultraviolet-absorbing polyester film according to claim 12, **characterized in that** expressed in percent by weight based on the total weight of the ultraviolet-absorbing polyester film, a content of the physically recycled polyester resin is between 50% and 95% by weight, a content of the chemically recycled polyester resin is between 1% and 40% by weight, and a total content of the physically recycled polyester resin and the chemically recycled polyester resin is between 55% and 100% by weight.

15. The ultraviolet-absorbing polyester film according to claim 12, **characterized in that** the ultraviolet-absorbing polyester film is a transparent film; wherein the ultraviolet-absorbing polyester film further includes a slipping agent, and the slipping agent is at least one selected from the group consisting of silicon dioxide, calcium carbonate, barium sulfate, polystyrene, silica gel, and acrylic; wherein, expressed in percent by weight based on the total weight of the ultraviolet-absorbing polyester film, an added amount of the slipping agent is between 5% and 10% by weight.

16. The ultraviolet-absorbing polyester film according to claim 12, **characterized in that** the ultraviolet-absorbing polyester film is a matte film; wherein the ultraviolet-absorbing polyester film further includes a matte additive, and the matte additive is selected from the group consisting of silicon dioxide, calcium carbonate, aluminum oxide, and talc; wherein, expressed in percent by weight based on the total weight of the ultraviolet-absorbing polyester film, an added amount of the matte additive is between 0.5% and 10% by weight.

17. The ultraviolet-absorbing polyester film according to claim 12, **characterized in that** the ultraviolet-absorbing polyester film is a white film; wherein the ultraviolet-absorbing polyester film further includes a white additive, and the white additive is selected from the group consisting of titanium dioxide, barium sulfate, and calcium carbonate; wherein, expressed in percent by weight based on the total weight of the ultraviolet-absorbing polyester film, an added amount of the white additive is between 5% and 40% by weight.

18. The ultraviolet-absorbing polyester film according to claim 12, **characterized in that** the ultraviolet-absorbing polyester film is a black film; wherein the ultraviolet-absorbing polyester film further includes a black additive, and the black additive is selected from the group consisting of carbon black and black coloring materials; wherein, expressed in percent by weight based on the total weight of the ultraviolet-absorbing polyester film, an added amount of the black additive is between 5% and 40% by weight.
